(19) Europäisches Patentamt
European Patent Office
Office européen des brevets

(11) Publication number: **0 168 080**
**A1**

(12) # EUROPEAN PATENT APPLICATION

(21) Application number: 85200894.5

(22) Date of filing: 06.06.85

(51) Int. Cl.[4]: A 23 K 1/16
A 23 K 1/18, A 23 J 3/00

(30) Priority: 08.06.84 GB 8414612

(43) Date of publication of application:
15.01.86 Bulletin 86/3

(84) Designated Contracting States:
BE CH DE FR GB LI NL SE

(71) Applicant: UNILEVER NV
Burgemeester s'Jacobplein 1 P.O. Box 760
NL-3000 DK Rotterdam(NL)

(84) Designated Contracting States:
BE CH DE FR LI NL SE

(71) Applicant: UNILEVER PLC
Unilever House Blackfriars P.O. Box 68
London EC4P 4BQ(GB)

(84) Designated Contracting States:
GB

(72) Inventor: Thomas, Alfred
Haidkoppelweg 6
D-2057 Reinbeck(DE)

(72) Inventor: Sagredos, Angelos N.
Lenhartz Strasse 6
D-2000 Hamburg 20(DE)

(74) Representative: Dries, Antonius Johannes Maria et al,
Unilever N.V. Patent Division P.O. Box 137
NL-3130 AC Vlaardingen(NL)

(54) **Process for the preparation of protected protein.**

(57) Protected protein is prepared by subjecting a composition which comprises 85-30 wt.% dry proteinaceous oil seed material and 15-70 wt.% water to a heat treatment at a temperature between 70° and 100°C in the presence of dialdehyde starch and/or edible acid. In a preferred embodiment the process is carried out at 80-90°C for 0.25-2 hours in the presence of 0.1-2 wt.% dialdehyde starch at pH 4-5. The product can be incorporated in animal feedstuff and used in particular for feeding ruminants.

EP 0 168 080 A1

# PROCESS FOR THE PREPARATION OF PROTECTED PROTEIN

The invention relates to a process for the preparation of protected protein, to animal feedstuff including the protected protein and to the use of the products obtained for feeding animals.

It is well known that micro-organisms present in the rumen and reticulum of ruminants degrade the proteinaceous material added with the feed for their own growth and their own increase to form urea and ammonia, which are partly removed with the urine and also with exhaled air and cannot therefore be utilized by the animal. In this way a considerable portion of the proteinaceous material added with the feed is lost and therefore does not benefit the animal.

Therefore proposals have been made to protect the proteinaceous material in some way or other from degradation in the rumen. As an indication for the effectiveness of the protection against premature degradation of the protein, the reduction of the solubility of the protein can be used. To yield a suitable feedstuff for ruminants, it is further essential that the protection of the protein does not adversely affect the digestibility thereof in the intestinal canal.

In DE-PS 1 692 412 (The Commonwealth Scientific and Industrial Research Organization of Australia) it has been proposed to treat the surface of proteinaceous particles with an aldehyde or provide them with a coating of certain polymers to form surfaces which are unstable at a pH of 4 and relatively stable at a pH exceeding 5. The aldehydes that are mentioned include ethanedial, pentanedial and particularly methanal.

In DE-PS 1 692 441 (Institut de la Recherche Agronomi-

que, France) it has been proposed to manufacture feedstuffs which have been protected against bacterial deamination by treating the feedstuffs, in an aqueous medium, with tanning matter, such as tannic acid, so long that they virtually contain no soluble nitrogen and the reaction product is then dried at temperatures below 80°C.

DE-PS 2 451 509 (Milkivit-Werke A.Trouw GmbH) claims the protection of the surface of protein-based feed materials by treating the feed materials with ethanal, ethanedial, pentanedial and methanal or with an aldehyde-separating substance, such as hexamethylene tetramine, in the presence of amorphous silicic acid.

These processes present certain disadvantages. Toxic and/or environmentally unsatisfactory chemicals are used which necessitate the use of special equipment. The used substances, alien to the body, such as tannins, polymers and amorphous silicic acid, are retained in the feed material.

Feedstuffs, November 9 (1981), pp 24-26 and 38, is a review paper which describes processes for preparing protected protein by subjecting proteinaceous oil seed material to a heat treatment. The processes described had been carried out at various temperatures above 100°C, mostly between 130° and 150°C. For many of the processes the use of high pressure equipment such as an extruder or an autoclave is required. The success in preparing protected protein varied widely between the various processes. In particular, the paper reports an unsuccessful attempt to prepare protected protein by subjecting soybeans for 24 hours to a heat treatment at 105°C.

It has now been found that by conversion with dialdehyde starch and/or acid, certain proteinaceous

materials can be protected against premature degradation without the need to use toxic and/or environmentally unsatisfactory compounds. Moreover, no undesirable contaminants are left behind in the feedstuff. The conversion can be carried out in conventional equipment at atmospheric pressure and the energy requirements of the process are relatively low.

Accordingly, the invention provides a process for the preparation of protein protected from premature degradation in the rumen of ruminants, wherein a composition which includes 15-70% by weight of water and 85-30% by weight of dry proteinaceous oil seed material is subjected to a heat treatment at a temperature of at least 70° but below 100°C in the presence of a substance selected from the group consisting of edible acids and dialdehyde starch and mixtures thereof.

Dialdehyde starch is a commercially available compound which can be made from starch by oxidation with periodic acid. At an oxidation degree of 90% or more, it contains about 2 aldehyde groups per each glucose unit that is originally present, corresponding approximately to the following formula:

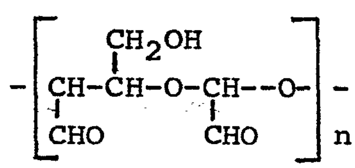

It is a non-toxic compound which is digested immediately and therefore it is not necessary to remove any non-converted dialdehyde starch afterwards. Preferably, the amount of dialdehyde starch used is at least 0.1% by weight calculated on the amount of protein. To prevent unnecessarily large amounts of dialdehyde starch in the animal feedstuff, which large amounts might have undesirable effects, the amount of dialdehyde starch to be used should not be larger than 5% by weight calculated on the amount of protein. The dialdehyde starch is preferably added as an aqueous solution (or suspension, if the solubility is exceeded).

Oil seed proteins which can be protected by treatment with dialdehyde starch and/or edible acid according to the invention are for example proteins contained in roughage and meals, as obtained after the extraction of oil from soybean, rapeseed, sunflower seed, groundnuts, cottonseed, coconut, linseed, sesame seed, poppy seed, etc., and in products obtained therefrom, such as roasted meals, de-sugared and/or defatted flour, protein concentrates and protein isolates. Preferably the oil seed protein is soya protein. It is particularly preferred to use de-oiled oilseed flakes as the proteinaceous oil seed material in the composition to be treated with dialdehyde starch. Accordingly, the oil seed material to be treated may comprise from about 15 or 20 to 100 wt.% oil seed protein. Preferably, the material to be treated comprises from 25 to 85 wt.%, more preferably from 40 to 60 wt.% of oil seed protein, calculated on the dry weight of the oil seed material.

The water content of the composition should at least be 15% by weight. At lower water contents, no effective protection of the protein is obtained. Preferably, the water content is 20-50%, more preferably 20-30% by weight.

The present process can be carried out with or without using dialdehyde starch. In both cases the heat treatment is preferably carried out in the presence of edible acid in an amount such that the composition has a pH of 2.8-6.5. By the pH of the composition is meant the pH of the aqueous phase of the composition. It is particularly preferred that the heat treatment is carried out in the presence of both edible acid and dialdehyde starch.

Preferably the proteinaceous material to be treated is in the form of discrete particles, such as flakes. The water to be added to obtain the desired moisture content which may contain the dialdehyde starch, can be absorbed in the proteinaceous particles such that the conversion takes place as a heterogeneous reaction. The aqueous phase of the composition preferably has a pH of from 2.8 to 6, more preferably from 4 to 5. To achieve this pH-value, for example hydrochloric acid or phosphoric acid can be used. At alkaline pH the solubility of the protein is reduced to a lesser extent than at acid pH. Moreover, the products converted at low pH have a better smell and a lighter colour than those converted at high pH. At pH below about 2.8 hydrolysis of the protein may occur.

Preferably, the reactants are mixed together and subsequently heated to a temperature of at least 70°C under constant agitation.

The lower the water content of the reaction mixture, the more economic the process is. If desired, the water is removed afterwards by drying the reaction product under mild conditions (preferably at 30-50°C) until a residual moisture content of 6-10% has been achieved.

The preferred amount of dialdehyde starch used is between 0.1 and 2%, more preferably between 0.5 and 1%, calculated on the weight of the protein to be protected. The dialdehyde starch is preferably added as an aqueous solution or suspension, which preferably contains about 10% dialdehyde starch. The aqueous medium in which the dialdehyde starch is to be dissolved or dispersed, preferably has a pH of about 8. A particularly suitable medium is an aqueous solution containing about 1% of sodium propanoate or ethanoate, of which sodium propanoate is preferred. (A solution of 1% sodium propanoate has a pH of about 7.8. Dissolving 10%

dialdehyde starch into this solution reduces the pH to about 5.) Propionic acids and salts thereof may be used as feed material additives. The dialdehyde starch solution or suspension can be diluted before addition with the water needed for obtaining the desired moisture content.

The reaction mixture obtained is preferably heated at a temperature of at least 70° but below 100°C for 10 minutes to 16 hours. The optimal heating time depends on the heating temperature, the water content and the desired extent of protection. An advantage of the present process is that the risk of overprotection occurring is relatively small. On the other hand, to prevent unnecessarily high energy consumption, the heating time is preferably chosen as short as possible, to achieve the desired degree of protection at the chosen temperature. Generally, the heating time preferably is about 0.25 to 2 hours. At about 90°C, the heating is preferably applied for 0.25 to 1 hour, more preferably for 0.3 to 0.6 hours. At 80°C, the heating time preferably is about 0.5 to 2 hours. The temperature at which the conversion is carried out is preferably 80-95°C. At substantially higher temperatures, the colour of the products may become very dark.

The reaction is preferably carried out at a pH of 4-5. The pH can be adjusted with inorganic acids, such as phosphoric acid and hydrochloric acid or with organic acids, such as the low water-soluble alkane acids, preferably propionic acid, succinic acid or tartaric acid. It is particularly preferred to use phosphoric acid. Phosphoric acid does not cause corrosion of the equipment and the amounts required to obtain the desired pH are small.

The products obtained can be used as components of feed for ruminants, such as cattle, sheep, goats and for

ruminants kept in zoological gardens, such as camels and giraffes.

The product of the present process is particularly suitable for incorporation in the feedstuffs for ruminants. The product can, however, also suitably be used for feeding other animals. An advantage of the present process is that it can reduce antinutritional factors which may occur in oil seed material. For example, the process can reduce the trypsin inhibitor activity of proteinaceous soybean products, which is important when the product is to be used for feeding e.g. calves, by incorporating it in a calf milk replacer.

Compositions for feeding animals preferably include 2-70 wt.%, more preferably 5-50 wt.% of the product of the present process, calculated as dry contents on the total dry weight of the composition. For compositions for feeding ruminants it is particularly preferred that the composition includes 5-20 wt.% of the product of the present process, calculated on the dry contents.

The invention is further illustrated by the following Examples but is not restricted thereto. In all Examples in which dialdehyde starch is employed, a commercial grade of dialdehyde starch is used. The dialdehyde starch used is a white to slightly yellowish powder having an oxidation degree of 90% or more and contains at most 12% moisture and displays at most 1% sulphate ash.

The solubility of the protein was determined as follows: 20 g of the material to be analyzed was thoroughly mixed with 300 ml distilled water at a temperature of 50-55°C. Insoluble substances were removed from the mixture obtained by centrifuging and the volume of the remaining solution was determined. In 15 ml of the

mixture N was determined according to Kjeldahl and the protein content is calculated with the factor 6.25.

The solubility of the protein indicates the percentage of the protein which is readily available and which consequently will almost certainly be digested in the rumen. At lower solubility of the protein the amount of protein which will not be prematurely digested will be higher.

The N-degradability of the protein was determined _in situ_ as described by P.N. Wilson and P.J. Strachan in W. Haresign, Recent advances in Animal nutrition (1980), Butterworths, London - Boston, p. 99-118. The N-degradability after 6 hours is a measure for the part of the protein that will be digested in the rumen. The N-degradability after 6 hours will be higher than the solubility of the protein, because in the rumen not only the readily available protein is digested, but also part of the less readily available protein. For comparable protein sources, prepared in a comparable way, there is a positive correlation between solubility data and N-degradability data after 6 hours. The N-degradability after 48 hours is an indication for the part of the protein which is digestible at all. Thus, for protected protein, the N-degradability after 6 hours should be low and after 48 hours it should be high. An indication of the digestibility of the protein can also be determined by rat-feeding tests.

Example 1

10 kg soybean meal containing about 11% water were introduced into a jacketed stirrer. The pH was adjusted to about 4.5 by adding a solution of phosphoric acid, prepared by dilution of 0.7 kg of an 85% phosphoric acid solution with 3.9 kg water. While stirring, which was continued during the whole procedure, a solution of

0.05 kg dialdehyde starch prepared by dilution of 0.5 l of a 10% dialdehyde solution containing 1% sodium propanoate, with 3.9 kg water, was added.

The amounts of water added wetted the soybean meal until a moisture content of about 50% had been obtained. The reaction mixture was heated to 80°C within 50 min. and then kept at this temperature for 2 hours. The soybean meal thus treated was dried at 40°C for about 20 hours.

| Analysis : | % |
|---|---|
| Water content | 8.5 |
| Crude protein | 50.9 |
| Water-soluble protein | 0.2 |
| Solubility of the protein | 0.4 |

Example 2

Example 1 was repeated without using phosphoric acid. The pH of the composition was about 7. (The solubility of the protein in the starting material was about 30%.)

| Analysis : | % |
|---|---|
| Water content | 8.2 |
| Crude protein | 52.7 |
| Water-soluble protein | 9.2 |
| Solubility of the protein | 17.5 |

Example 3

10 kg soybean meal (moisture content about 11%) were introduced into a stirred vessel. The pH was adjusted to about 4.0 by adding hydrochloric acid, prepared by dilution of 0.5 kg of 37% hydrochloric acid with 1 kg water.

While stirring, which was continued during the whole procedure, a solution containing 0.05 kg dialdehyde starch, prepared by dilution of 0.5 l of a 10% solution of dialdehyde starch in a 1% aqueous solution of sodium propanoate with 1 kg water, was added. The amounts of water added wetted the soybean meal until a moisture content of about 30% had been achieved. After a heating time of about 30 min., the reaction mixture was kept at a temperature of 80°C for 2 hours. It was then dried as in Example 1.

| Analysis : | % |
|---|---|
| Water content | 7.0 |
| Crude protein | 50.5 |
| Water-soluble protein | 1.0 |
| Solubility of the protein | 2.0 |

Example 4

400 g soybean meal (moisture about 10%) were introduced into a jacketed stirrer.
The pH was adjusted to about 8.0 by addition of a

sodium hydroxide solution, prepared by dilution of 23 ml of 10 sodium hydroxide solution with 350 g water. While stirring, which was continued during the whole procedure, a solution of 2 g dialdehyde starch, prepared by dilution of 20 ml of a 10% solution of dialdehyde starch in a 1% aqueous solution of sodium propanoate with 300 g water, was added.
The amounts of water added wetted the soybean meal until a moisture content of about 70% had been achieved.
After a heating period of about 30 min., the mixture was kept at a temperature of 80°C for 2 hours. The mixture was then dried at 40°C for 24 hours. The product obtained had a rather dark colour; its smell was less pleasant than that of the products obtained in Examples 1 and 2.

| Analysis : | % |
|---|---|
| Water content | 7.8 |
| Crude protein | 48.8 |
| Water-soluble protein | 3.7 |
| Solubility of the protein | 7.6 |

Examples 5-8

A series of experiments was carried out using soybean meal (47.5% protein, 11% moisture) as starting material. Each time 31.4 g of a concentrated phosphoric acid solution (85%) was added to 1 kg of the soybean meal (3% $H_3PO_4$ on dry matter). In one case 50 g of a solution containing 10 wt.% dialdehyde starch dissolved in a 1% aqueous solution of sodium propionate was added (1 wt.% dialdehyde starch on protein). In another case the same amount of dialdehyde starch was added, but as a solution in phosphoric acid, instead of in a sodium propionate solution. The moisture content of the composition was adjusted to 30%. In one case,

the moisture content was adjusted to 23% instead of 30%. The pH of each of the compositions was about 5.

Subsequently, each composition was heated within 20 minutes to 90°C and kept at that temperature for 30 minutes at atmospheric pressure. The products were then dried and analyzed. The compositions used in the experiments and the results of the analysis are shown in Table 1 and Table 2, respectively.

Table 1

| Example | dialdehyde starch | moisture content (%) |
|---|---|---|
| Starting material | - | 11 |
| 5 | - | 30 |
| 6 | in Na propionate | 30 |
| 7 | in $H_3PO_4$ | 30 |
| 8 | in Na propionate | 23 |

Table 2

| Example | Moisture (%) | Crude protein (%) | Solubility of protein (%) | TIA* | % N-degradability° 6 hours | % N-degradability° 48 hours |
|---|---|---|---|---|---|---|
| Starting material | 11 | 47.5 | 29.9 | 5.2 | 62.1 (5.7) | 99.1 (0.3) |
| 5 | 8.3 | 48.3 | 4.7 | 2.2 | 46.2 (1.9) | 99.3 (0.3) |
| 6 | 9.1 | 47.7 | 4.3 | 2.2 | 32.4 (0.8) | 99.7 (1.5) |
| 7 | 8.1 | 48.6 | 3.9 | 2.9 | 35.4 (3.9) | 94.9 (4.6) |
| 8 | 10.6 | 47.1 | 7.3 | -** | - | - |

* Trpysin inhibitor activity

** Not determined

° The numbers between brackets indicate the standard deviation.

Examples 9-11

500 g soybean meal (moisture about 10%) were introduced into a laboratory autoclave.

The pH was adjusted to 4.5 by addition of a solution of 3.05 g propionic acid in 0.5 kg water. While stirring, dialdehyde starch, the amounts of which are indicated in the following Table, calculated on the amount of meal, was added in the form of a 10% solution diluted with about the indicated amounts of water in a 1% aqueous sodium propanoate solution.

The amounts of water added wetted the soybean meal until a moisture content of about 70% had been achieved. After heating, the reaction mixture was kept at 80°C for 16 hours, during which stirring was continued.

After drying, the product was analyzed.

| | Ex. 9 | Ex. 10 | Ex. 11 |
|---|---|---|---|
| Dialdehyde starch (% on soybean meal) | 0.5 | 1.0 | 1.5 |
| 10% solution (g) | 25 | 50 | 75 |
| Amount of water (g) | 478 | 455 | 433 |

Analysis :

| | Ex. 9 | Ex. 10 | Ex. 11 |
|---|---|---|---|
| Water content (%) | 2.0 | 2.0 | 2.5 |
| Crude protein (%) | 44.1 | 43.7 | 42.8 |
| Water-soluble protein (%) | 2.2 | 2.0 | 1.9 |
| Solubility of the protein (%) | 5.1 | 4.6 | 4.4 |

Example 12

As in Example 3, 10 kg soybean meal were treated with dialdehyde starch. However, the reaction temperature was 96°C.

| Analysis : | % |
|---|---|
| Water content | 7.4 |
| Crude protein | 51.2 |
| Water-soluble protein | 3.1 |
| Solubility of the protein | 6.1 |

Example 13

Example 1 was repeated, but the moisture content of the composition was adjusted to 22% and the heating time was 30 minutes.

| Analysis : | % |
|---|---|
| Water content | 9.4 |
| Crude protein | 46.1 |
| Water-soluble protein | 2.4 |
| Solubility of the protein | 5.3 |

Examples 14-16

As in Example 1, rape meal, sunflower kernel meal and a de-sugared soy protein concentrate, marketed under the trade-name of Soycomil by Unimills B.V., Zwijndrecht (Holland), were treated with dialdehyde starch.

| Example | 14 | 15 | 16 |
|---|---|---|---|
| Analysis : | Rape | Sunflower kernel | Soycomil |
| Water content (%) | 10.8 | 9.2 | 10.9 |
| Crude protein (%) | 35.0 | 30.1 | 61.5 |
| Water-soluble protein (%) | 0.79 | 0.25 | 0.20 |
| Solubility of the protein (%) | 2.2 | 0.83 | 0.3 |

Examples 17-22

A series of experiments was carried out without using dialdehyde starch. The starting material used each time was soybean meal having a water content of 8.4% and a protein content of 48.6%.
3 wt.% or 7 wt.% phosphoric acid, calculated on the dry matter of the soybean meal, was added, using a concentrated solution (85%) to adjust the pH to about 5 or 4, respectively.
The water content of the composition was adjusted to 30%.

The compositions were heated for 2, 4 or 6 hours at 80°C at atmospheric pressure. The products were then dried for 10 hours at a temperature of 35°C. The results of the analysis of the products are shown in Table 3.

Table 3

| Example | pH | heating time (hours) | moisture (%) | crude protein (%) | solubility of protein (%) |
|---|---|---|---|---|---|
| Starting material | 7 | - | 8.4 | 48.6 | 33.1 |
| 17 | 5 | 2 | 7.6 | 48.6 | 7.6 |
| 18 | 5 | 4 | 7.6 | 48.6 | 6.2 |
| 19 | 5 | 6 | 7.6 | 48.6 | 6.5 |
| 20 | 4 | 2 | 7.8 | 47.7 | 4.0 |
| 21 | 4 | 4 | 8.0 | 47.7 | 4.0 |
| 22 | 4 | 6 | 8.1 | 47.5 | 4.6 |

Examples 23-26

Examples 17 and 20 were repeated, but the heating was carried out for 2 hours at 90°C. These two experiments were also carried out using 1% dialdehyde starch, calculated on the amount of protein, in the composition. The results of the analysis are shown in Table 4.

Table 4

| Ex. | pH | dialdehyde starch (%) | moisture (%) | crude protein (%) | digestibility** (%) | N-degradability* 6 h (%) | N-degradability* 48 h (%) |
|---|---|---|---|---|---|---|---|
| 23 | 5 | - | 8.3 | 50.2 | 88.1 | 36.5 (0.2) | 99.3 (0.1) |
| 24 | 4 | - | 8.6 | 48.3 | 89.1 | 30.2 (2.8) | 99.3 (0.1) |
| 25 | 5 | + | 8.3 | 49.3 | 89.2 | 30.0 (5.6) | 98.8 (0.1) |
| 26 | 4 | + | 8.9 | 48.3 | 90.1 | 27.7 (2.1) | 98.1 (0.7) |

* The numbers between brackets indicate the standard deviation.

** Determined by rat-feeding tests. There were no palatability problems when the diets including the protected protein were fed to the rats.

Examples 27-31

A series of experiments was carried out using the same procedure as in Example 1. The amount of dialdehyde starch used was 1.2%, calculated on the amount of protein. As starting material hexane-extracted soybean flakes having a water content of about 10% and a protein content of about 50% were used. The pH of the compositions was 4-4.5. The solubility of the protein was determined. The conditions and results are given in Table 5 below.

Table 5

| Ex. | Amount soybean meal kg | Water content (%) | pH adjusted with | Temperature (°C) | Time (h) | Solubility of protein (%) |
|---|---|---|---|---|---|---|
| 27 | 0.5 | 30 | $H_3PO_4$ | 70 | 2 | 7.1 |
| 28 | 0.5 | 30 | $H_3PO_4$ | 70 | 6 | 5.8 |
| 29 | 10 | 30 | $H_3PO_4$ | 80 | 0.5 | 4.4 |
| 30 | 10 | 50 | HCl | 80 | 2 | 4.3 |
| 31 | 0.5 | 50 | HCl | 80 | 6 | 2.2 |

Examples 32-37

A series of experiments was carried out using the procedure described in Example 1. The amount of dialdehyde starch used was 1%, calculated on the amount of protein. The starting material was soybean meal which contained about 10% water and 50% protein. The heat treatment was carried out at 80°C. The solubility of the protein was determined. The conditions and results are given in Table 6 below.

For comparison, Example 33 was repeated, but using a heat treatment of 10 minutes at 125°C in an autoclave. The product had a protein solubility of 4.4. The colour of the product was relatively dark. When the product of Example 33 and the comparative product were offered to cats, they preferred the product of Example 33.

Table 6

| Ex. | Amount soybean meal kg | Water content (%) | pH | pH adjusted with | Time (h) | Solubility of protein (%) |
|---|---|---|---|---|---|---|
| 32 | 0.5 | 70 | 3.5 | HCl | 16 | 1.6 |
| 33 | 0.5 | 40 | 4-4.5 | $H_3PO_4$ | 2 | 4.5 |
| 34 | 10 | 30 | 5 | $H_3PO_4$ | 0.5 | 5.4 |
| 35 | 10 | 30 | 5 | $H_3PO_4$ | 2 | 6.5 |
| 36 | 10 | 30 | 6-6.2 | $H_3PO_4$ | 2 | 9.3 |
| 37 | 0.5 | 70 | 8.5 | NaOH | 16 | 7.0 |

Examples 38-44

A series of experiments without using dialdehyde starch was carried out using various compositions and heating times. The starting material was soybean meal (about 50% protein, 10% moisture). The temperature during the heat treatment was 80°C. The conditions used and the

results of the analysis are shown in Tables 7 and 8.

Table 7

| Ex. | Water content (%) | Heating time (hours) | pH | pH adjusted with |
|---|---|---|---|---|
| 38 | 50 | 2 | 4-4.5 | phosphoric acid |
| 39 | 30 | 2 | 5-5.2 | phosphoric acid |
| 40 | 30 | 2 | 6-6.2 | phosphoric acid |
| 41 | 30 | 0.5 | 4-4.5 | phosphoric acid |
| 42 | 22 | 0.5 | 4-4.5 | phosphoric acid |
| 43 | 30 | 0.5 | 5 | phosphoric acid |
| 44 | 30 | 0.5 | 5 | propionic acid |

Table 8

| Ex. | Water content (%) | Crude protein (%) | Water-soluble protein (%) | Solubility of protein (%) |
|---|---|---|---|---|
| 38 | 5.6 | 49.4 | 4.9 | 9.9 |
| 39 | 7.1 | 50.8 | 4.6 | 9.1 |
| 40 | 7.1 | 51.8 | 18.5 | 35.7 |
| 41 | 7.1 | 47.2 | 3.3 | 7.0 |
| 42 | 6.8 | 46.6 | 4.3 | 9.2 |
| 43 | 10.2 | 47.5 | 4.5 | 9.5 |
| 44 | 6.5 | 49.2 | 4.2 | 8.5 |

Example 45

A protein-containing feed composition was prepared, in which dialdehyde starch protected soybean meal prepared according to Example 6 was incorporated together with the following ingredients:

| | Quantity (%) | Dry matter (%) | Crude protein in dry mixture (%) |
|---|---|---|---|
| Hay | 7.6 | 82.6 | 13.8 |
| Wilted silage | 40.8 | 54.3 | 14.4 |
| Ensilated shredded corn cobs | 31.2 | 44.9 | 8.2 |
| Mixed feed for dairy cattle | 12.5 | 88.2 | 12.2 |
| Protected soybean meal | 7.9 | 85.2 | 53.9 |

The mixed feed for dairy cattle was composed as follows:

| | % |
|---|---|
| Maize kernel meal | 20 |
| Sunflower meal | 5 |
| Oats | 15 |
| Dry chips | 20 |
| Palmkernel meal | 10 |
| Tapioca | 21 |
| Molasses | 6 |
| Mineral mixture | 3 |

The soy protein protected with dialdehyde starch constitutes 31% of the crude protein of the feed composition. The feed absorption is about 21 kg per day corresponding to 12.3 kg dry matter. This composition was fed to 5 lactating cows for 1 month. The composition was well accepted and the cows had high milk production.

Example 46

A feeding test was carried out with rainbow trout, for which the diet composition is notoriously critical. Two groups of 40 rainbow trouts each were given a diet which contained either a product prepared according to

Example 23 (group A) or the soybean meal starting material (group B). The two diets had been matched, in particular regarding the overall protein, fat, fibre, ash and vitamin content.
50% of the protein was provided by a casein/gelatin mixture, the other 50% by the soybean material. The amount of soya material in the diet was 49.3 wt.% for group A and 46.7 wt.% for group B. The average body weight at the beginning of the test was 44 g for both groups. At the end of the test, the average body weight for group A was 110 g and for group B 104 g, thus the increase in body weight for group A was 10% higher than it was for group B. Both diets were well accepted. However, when the bath temperature was reduced to 12°C, group B refused the diet, whereas group A still accepted it.

## CLAIMS

1. Process for the preparation of protein protected from premature degradation in the rumen of ruminants, wherein a composition which includes 15-70% by weight of water and 85-30% by weight of dry proteinaceous oil seed material is subjected to a heat treatment at a temperature of at least 70 but below 100°C in the presence of a substance selected from the group consisting of edible acids and dialdehyde starch and mixtures thereof.

2. Process according to claim 1, wherein dialdehyde starch is used in an amount of 0.1-5% calculated on the weight of the protein in the composition.

3. Process according to claim 2, wherein the amount of dialdehyde starch is 0.1-2 wt.%.

4. Process according to claim 3, wherein the amount of dialdehyde starch is 0.5-1 wt.%.

5. Process according to any one of claims 1-4, wherein the heat treatment is carried out in the presence of edible acid in an amount such that the composition has a pH of 2.8-6.5.

6. Process according to claim 5, wherein the pH is 2.8-6.

7. Process according to claim 6, wherein the pH is 4-5.

8. Process according to any one of claims 1-7, wherein the heat treatment is carried out in the presence of phosphoric acid.

9. Process according to any one of claims 1-8, wherein the composition comprises 25-85% oil seed protein calculated on the dry weight of the composition.

10. Process according to claim 9, wherein the oil seed protein content is 40-60 wt.%.

11. Process according to any one of claims 1-10, wherein the composition comprises 20-50 wt.% water.

12. Process according to claim 11, wherein the composition comprises 20-30 wt.% water.

13. Process according to any one of claims 1-12, wherein the heat treatment is applied for 10 minutes to 16 hours.

14. Process according to claim 13, wherein the heat treatment is applied for 0.25 to 2 hours.

15. Process according to any one of claims 1-14, wherein the temperature is 80-95°C.

16. Protected protein product prepared according to the process of any one of claims 1-15.

17. Animal feedstuff which includes a protected protein product prepared according to the process of any one of claims 1-15.

18. Animal feedstuff according to claim 17, which includes 2-70% of the protected protein product, calculated as percentage by weight on dry matter.

19. Animal feedstuff according to claim 18, wherein the content of the protected protein product is 5-50% by weight, preferably 5-20% by weight.

0168080

20. Use of a protected protein product prepared according to the process of any one of claims 1-15 for feeding animals.

21. Use of a protected protein product prepared according to the process of any one of claims 1-15 for feeding ruminants.

22. Use of animal feedstuff according to any one of claims 17-19 for feeding animals.

23. Use of animal feedstuff according to any one of claims 17-19 for feeding ruminants.

European Patent Office

**EUROPEAN SEARCH REPORT**

0168080
Application number

EP 85 20 0894

**DOCUMENTS CONSIDERED TO BE RELEVANT**

| Category | Citation of document with indication, where appropriate, of relevant passages | Relevant to claim | CLASSIFICATION OF THE APPLICATION (Int. Cl.4) |
|---|---|---|---|
| X | DD-A-2 001 897 (AKADEMIE DER WISSENSCHAFTEN DER DDR) * Claims 1-3; examples 1,3 * | 1-4 | A 23 K 1/16<br>A 23 K 1/18<br>A 23 J 3/00 |
| X | CHEMICAL ABSTRACTS, vol. 86, no. 5, 31st January 1977, page 275, no. 28713j, Columbus, Ohio, US; J. PROLL et al.: "The effect on the nutritional value of proteins of modification by dialdehyde starch", & NAHRUNG 1976, 20(4), 429-36 * Abstract * | 1,17 | |
| X | FR-A-2 196 755 (CARGILL) * Claims 1-5,7,14; page 1, lines 1-5; example 1 * | 1,5-9, 11-14, 17 | |
| | | | TECHNICAL FIELDS SEARCHED (Int. Cl.4) |
| | | | A 23 J<br>A 23 K |

The present search report has been drawn up for all claims

| Place of search | Date of completion of the search | Examiner |
|---|---|---|
| THE HAGUE | 17-0[illegible]-1985 | PEETERS J.C. |

**CATEGORY OF CITED DOCUMENTS**

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03.82